# EUROPÄISCHE PATENTSCHRIFT

(11) **EP 0 698 407 B1**
(45) Veröffentlichungstag und Bekanntmachung des Hinweises auf die Patenterteilung: **12.11.1997**
(21) Anmeldenummer: 94810489.8
(22) Anmeldetag: 26.08.1994
(51) Int. Cl.: B01D 24/22, C02F 3/06

(54) **Abwasserbehandlungsreaktor mit Düsenboden**
Waste water treatment reactor with a partition containing nozzles
Réacteur pour le traitement des eaux usées pourvu d'une plaque distributrice avec des buses

(43) Veröffentlichungstag der Anmeldung: 28.02.1996
(73) Patentinhaber: CT Umwelttechnik AG, CH-8404 Winterthur (CH)
(72) Erfinder: Escobar-Jordán, José Andrés, D-61231 Bad Nauheim (DE)
(74) Vertreter: Heubeck, Bernhard

(56) Entgegenhaltungen:
- EP-A- 0 019 655
- DE-A- 4 231 582
- FR-A- 1 013 722
- US-A- 1 569 896

## Beschreibung

Die Erfindung betrifft einen Abwasserbehandlungsreaktor mit Düsenboden gemäss Oberbegriff von Anspruch 1 sowie ein Verfahren zum Herstellen eines derartigen Reaktors.

Beim genannten Reaktor findet in der Filterkammer in einem Festbett eine biologisch-mechanische Abwasserbehandlung statt. Von der im Festbett wachsenden Biomasse und den dort abgeschiedenen Schwebepartikeln muss periodisch ein Teil mittels eines Spülvorgangs aus dem Reaktor entfernt werden. Dazu wird aus dem unter dem Düsenboden angeordneten Polsterraum ein Luft/Wassergemisch durch Bodendüsen in das Festbett eingetragen.

Während der Abwasserbehandlung muss der Düsenboden einem von oben wirkenden Druck von rund 80 kN/m² standhalten. Beim Rückspülen ergibt sich im Polsterraum durch die Spülluft ein Überdruck von rund 40 kN/m². Damit nicht der Düsenboden (mitsamt dem Festbett) angehoben wird, müssen Befestigungsmittel vorgesehen werden. Bei bekannten Reaktoren werden Winkelstangen mit 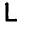 -förmigem Querschnitt an der Reaktorwand befestigt, um Düsenbodenplatten gegen ein Abheben zu sichern. Wegen des korrosiven Millieus müssen die Winkelstangen aus einem Edelstahl hergestellt werden, was beträchliche Kosten verursacht.

Es ist Aufgabe der Erfindung, einen Abwasserbehandlungsreaktor zu schaffen, dessen Befestigungsmittel für Düsenbodenplatten kostengünstiger als die bekannten Winkelstangen sind. Diese Aufgabe wird durch die Merkmale des Anspruchs 1 gelöst. Die Kosten für die erfindungsgemässen, betonierten Befestigungselemente sind bedeutend geringer als für die bekannten Befestigungsstangen aus Edelstahl.

Die abhängigen Ansprüche 2 bis 6 betreffen vorteilhafte Ausführungsformen des erfindungsgemässen Reaktors. Die Ansprüche 7 bis 10 beziehen sich auf Verfahren, wie der Reaktor mit den in den Ansprüchen 1 bis 6 definierten Befestigungsmitteln hergestellt werden kann.

Nachfolgend wird die Erfindung anhand der Zeichnungen erläutert. Es zeigen:
- Fig. 1: ausschnittsweise einen erfindungsgemässen Abwasserbehandlungsreaktor (ohne Festbett),
- Fig. 2: die Armierung eines konsoleartigen Befestigungselements des Düsenbodens,
- Fig. 3: einen Längsschnitt, im Bereich des Düsenbodens, durch einen Reaktor mit vier Düsenbodenplatten,
- Fig. 4: ein Detail zum Einbau einer Düsenbodenplatte in den Reaktor und
- Fig. 5: den Randbereich einer Düsenbodenplatte nach dem abgeschlossenen Einbau.

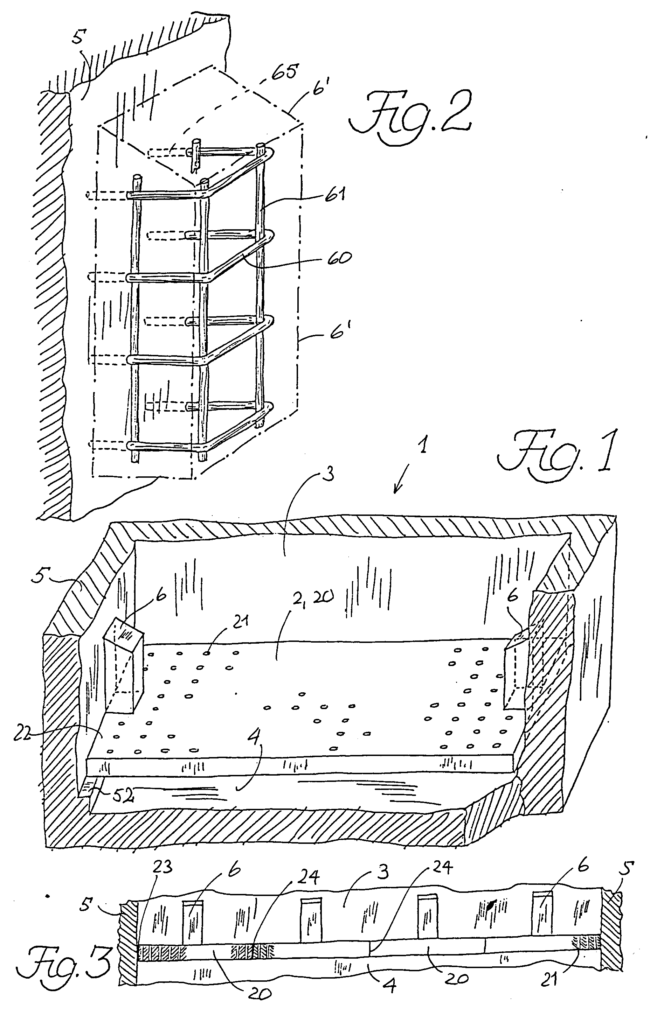

In Fig.1 sind folgende Bauteile des erfindungsgemässen Reaktors 1 zu sehen: Eine vorgefertigte Platte 20 des Düsenbodens 2, der den Filterraum 3 vom Polsterraum 4 trennt; eine betonierte, in einem Guss hergestellte Reaktorwand 5; ein Paar von konsoleartigen Befestigungselementen 6, die an der oberen Kante 22 der Platte 20 gegen Kräfte infolge eines im Polsterraum herrschenden Überdrucks wirken; und ein seitliches Auflager 52 für die Platten 20. Die Platten 20 umfassen eine rasterartige Anordnung von Düsenfassungen 21, in die nicht dargestellte Düsen eingeschraubt werden.

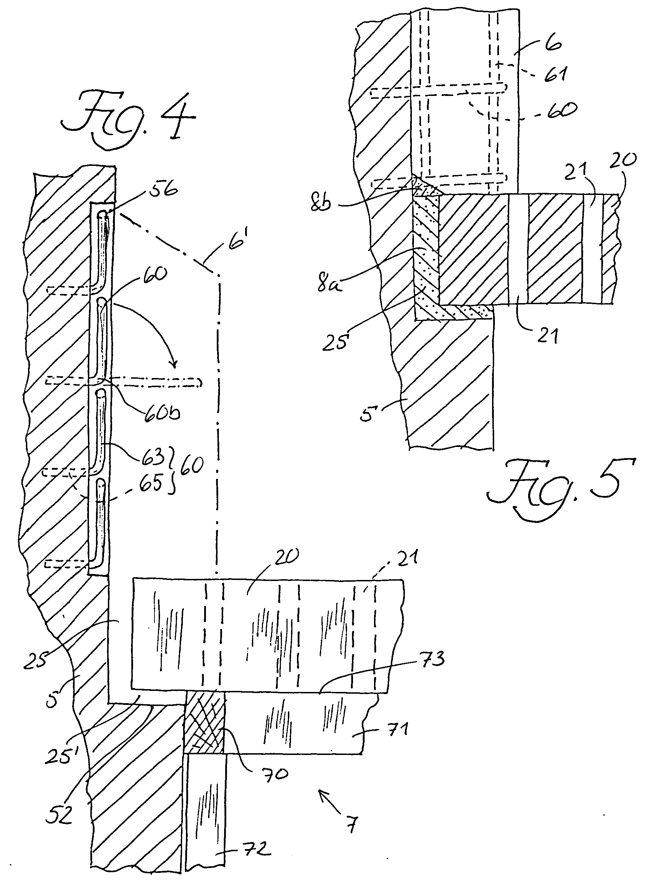

Fig.2 zeigt die Armierungsstruktur eines konsoleartigen Befestigungselements 6, das durch die strichpunktierten Linien 6' angedeutet ist. Diese Struktur setzt sich im dargestellten Ausführungsbeispiel aus vier im wesentlichen U-förmig gebogenen Stangen 60 und vier vertikalen Stangen 61 zusammen. Die Armierungsteile 65, die die freien Enden der U-förmigen Stangen 60 bilden, sind in der Reaktorwand 5 verankert, wobei diese Verankerungen 65 in die aus einem Guss hergestellte Reaktorwand 5 miteingegossen sind.

Der in Fig.3 dargestellte Längsschnitt verläuft quer zur Längsrichtung der in der Fig.1 gezeigten Platte 20. Die Ränder 23 und Stosstellen 24 der Platten 20 sind abgedichtet, so dass eine Wasserundurchlässigkeit zwischen der Filterkammer 3 und dem Polsterraum 4 vorliegt.

Fig.4 zeigt die Phase der Reaktorherstellung, insbesondere der Herstellung des Befestigungselements, unmittelbar nach Einlegen der Düsenbodenplatten 20 in den Reaktor 1. Die Platte 20 liegt in dieser Phase auf einem Montagegerüst 7 auf, das beispielsweise aus Vierkanthölzern 70, 71 und 72 zusammengesetzt ist. Wegen enger Höhentoleranzen, die für den Düsenboden 2 eingehalten werden müssen, weist das Gerüst 7 als Auflageflächen mit Vorteil gehobelte Oberflächen auf.

Mittels des Montagegerüsts 7 kann die Platte 20 um einen vorgegebenen Abstand über der seitlichen Auflagerfläche 52 positioniert werden. Die dabei entstehende Lücke 25' sowie die Fuge 25 zwischen der Wand 5 und der Düsenbodenplatte 20 werden mit einem Vergussmörtel 8a (siehe Fig.5) ausgegossen. Dabei kann das Kantholz 70 als Schalmittel für den Vergussmörtel 8a genutzt werden. Vorzugsweise wird ein Vergussmörtel gewählt, durch den sich eine kraftschlüssige Verbindung zwischen dem Düsenboden 2 und der Reaktorwand 5 ergibt.

Beim Giessen der Reaktorwände sind gebogene Armierungsstangen 60 für die Befestigungselemente 6 der Düsenbodenplatten 20 miteingegossen worden, wobei dafür gesorgt worden ist, dass Teile 63 dieser Armierungsstangen 60 im Reaktorinneren 3, in einer Nische 56 versenkt, frei bleiben. Die Teile 63 sind nach einer Biegestelle 60b nahe bei der Reaktorwand 5 parallel zu dieser ausgerichtet.

Nach Abdichten der Fuge 25 werden die freistehenden Teile 63 der Armierungsstangen 60 in das Reaktorinnere 3 hineingebogen (in Pfeilrichtung) und mit zusätzlichen Stangen 61 zu einer Armierungsstruktur verbunden (siehe Fig.2). Um die Armierungsstruktur wird der Betonkörper 6 gegossen, der kraftschlüssig einerseits mit dem Düsenboden 2 und andererseits mit der Reaktorwand 2 in Verbindung steht.

Der Querschnitt in Fig.5 zeigt das wesentliche Resultat des erfindungsgemässen Herstellverfahrens. Es ist in Fig.5 zusätzlich zu sehen, dass über der gefüllten Fuge 25 ein Fugenabschluss 8b mit keilförmigem Querschnitt vorgesehen ist. Dieser Abschluss 8b wird handwerklich mit einem Zementmörtel hergestellt.

## Patentansprüche

1. Abwasserbehandlungsreaktor (1) mit einem Düsenboden(2), in welchem der Düsenboden eine Filterkammer (3) nach unten von einem Polsterraum (4) trennt, der zwecks Rückspülung der Filterkammer belüftbar ist, wobei die Reaktorwand (5) in Form eines Betongusskörpers vorliegt und der Düsenboden mindestens eine vorgefertigte Platte (20) umfasst, die auf einem den Polsterraum seitlich begrenzenden Auflager (52) aufliegt und die an der oberen Kante (22) gegen ein Abheben aufgrund eines Überdrucks im Polsterraum gesichert ist,
dadurch gekennzeichnet, dass die von oben wirkende Sicherung des Düsenbodens mittels konsoleartiger Befestigungselemente (6) aus armiertem Beton hergestellt ist, wobei diese Befestigungselemente mittels Armierungsteilen (60) in der Reaktorwand verankert sind und die Verankerungen (65) in die aus einem Guss hergestellte Reaktorwand miteingegossen sind.

2. Reaktor nach Anspruch 1, dadurch gekennzeichnet, dass der oder jeder vorgefertigten Platte (20) des Düsenbodens (2) ein Paar konsoleartige Befestigungselemente (6) zugeordnet ist.

3. Reaktor nach Anspruch 1 oder 2, dadurch gekennzeichnet, dass die verankernden Armierungsteile (60) der konsoleartigen Befestigungselemente (6) jeweils aus einer gebogenen Stange besteht, die im wesentlichen U-förmig ist und deren freien Enden (65) in die Reaktorwand (5) eingegossen sind.

4. Reaktor nach Anspruch 3, dadurch gekennzeichnet, dass die U-förmigen Stangen (60) in horizontalen Ebenen angeordnet sind.

5. Reaktor nach Anspruch 4, dadurch gekennzeichnet, dass vertikale Stangen (61) mit den U-förmigen Stangen (60) verbunden sind und so die Armierung bilden.

6. Reaktor nach einem der Ansprüche 1 bis 5, dadurch gekennzeichnet, dass ein Vergussmörtel (8a), der Fugen (25) zwischen Düsenboden und Reaktorwand abdichtet, eine kraftschlüssige Verbindung herstellt.

7. Verfahren zum Herstellen eines Reaktors gemäss einem der Ansprüche 1 bis 6, dadurch gekennzeichnet, dass gebogene Armierungsstangen für Befestigungselemente von Düsenbodenplatten beim Giessen der Reaktorwände miteingegossen werden, wobei Teile der Armierungsstangen im Reaktorinneren, in Nischen versenkt, frei stehen und nach einer Biegestelle nahe bei der Reaktorwand parallel zu dieser ausgerichtet sind, dass nach der Fertigstellung der Reaktorwand vorgefertigte Düsenbodenplatten im Reaktorinneren eingelegt werden, dass sodann Fugen zwischen Düsenboden und Reaktorwand abgedichtet werden, dass die freistehenden Armierungsstangen in das Reaktorinnere hineingebogen werden und mit zusätzlichen Stangen jeweils zu einer Armierungsstruktur eines konsoleartigen Körpers verbunden werden und dass schliesslich um jede der Armierungsstrukturen ein Betonkörper gegossen wird, der kraftschlüssig einerseits mit dem Düsenboden und andererseits mit der Reaktorwand in Verbindung steht.

8. Verfahren nach Anspruch 7, dadurch gekennzeichnet, dass die Düsenbodenplatten beim Einlegen in das Reaktorinnere auf ein Montagegerüst aus Holz und mit gehobelter Auflagefläche aufgesetzt werden.

9. Verfahren nach Anspruch 8, dadurch gekennzeichnet, dass die mittels des Montagegerüsts um einen vorgegebenen Abstand über seitlichen Auflagerflächen positioniert werden und dass die Lücke zwischen diesen Auflagerflächen und den Düsenbodenplatten mit einem Vergussmörtel ausgegossen wird.

10. Verfahren nach Anspruch 9, dadurch gekennzeichnet, dass Teile des Montagegerüsts derart angeordnet werden, dass sie als Schalung für den Vergussmörtel genutzt werden können.

## Claims

1. Waste water treatment reactor (1) having a nozzle base (2) in which the nozzle base separates a filter chamber (3) at the bottom from a cushion chamber (4) which can be aerated for the purpose of backwashing the filter chamber, with the reactor wall (5) being present in the form of a cast concrete body and with the nozzle base comprising at least one prefabricated plate (20) which lies on a support (52) laterally bounding the cushion chamber and which is secured at the upper edge (22) against lifting due to an excess pressure in the cushion chamber, characterised in that the securing of the nozzle base acting from above is produced by means of bracket-like securing elements (6) of reinforced concrete, with these securing elements being anchored in the reactor wall by means of reinforcement parts (60) and with the anchorages (65) being cast into the reactor wall which is manufactured in one casting.

2. Reactor in accordance with claim 1, characterised in that a pair of bracket-like securing elements (6) is associated with the or each prefabricated plate (20) of the nozzle base (2).

3. Reactor in accordance with claim 1 or 2, characterised in that the anchoring reinforcement parts (60) of the bracket-like securing elements (6) respectively consist of a bent rod which is substantially U-shaped and the free ends (65) of which are cast into the reactor wall (5).

4. Reactor in accordance with claim 3, characterised in that the U-shaped rods (60) are arranged in horizontal planes.

5. Reactor in accordance with claim 4, characterised in that vertical rods (61) are connected to the U-shaped rods (60) and thus form the reinforcement.

6. Reactor in accordance with one of the claims 1 to 5, characterised in that a grouting compound (8a) which seals joints (25) between the nozzle base and the reactor wall generates a force transmitting connection.

7. Method for manufacturing a reactor in accordance with one of the claims 1 to 6, characterised in that bent reinforcement rods for securing elements of nozzle base plates are also cast into place during the casting of the reactor walls, with parts of the reinforcement rods, sunk in recesses, standing free in the interior of the reactor and being aligned after a bend close to and parallel to the reactor wall, in that the prefabricated nozzle base plates are set into the reactor interior after the completion of the reactor wall, in that joints between the nozzle base and the reactor wall are thereafter sealed, in that the free-standing reinforcement rods are bent into the interior of the reactor and connected to additional rods to respectively form a reinforcement structure of a bracket-like body, and in that finally a concrete body is cast about each of the reinforcement structures, with the concrete body communicating in a force transmitting manner with the nozzle base on the one hand and with the reactor wall on the other hand.

8. Method in accordance with claim 7, characterised in that, during the insertion into the interior of the reactor, the nozzle base plates are set onto an installation scaffold made from wood and having a planed support surface.

9. Method in accordance with claim 8, characterised in that the nozzle base plates (20) are positioned via the installation frame at a preset distance above lateral support surfaces and in that the gap between these support surfaces and the nozzle base plates are grouted with a grouting compound.

10. Method in accordance with claim 9, characterised in that parts of the installation frame are arranged such that they can be used as shuttering for the grouting compound.

## Revendications

1. Réacteur des eaux usées (1) avec un fond à tuyères (2), dans lequel le fond à tuyères sépare une chambre de filtration (3) vers le bas d'un espace de rembourrage (4) qui peut être aéré en vue d'un lavage à contre-courant de la chambre de filtration, la paroi de réacteur (5) se présentant sous la forme d'un corps coulé en béton et le fond à tuyères comportant au moins une plaque préfabriquée (20) qui repose sur un support (52) délimitant latéralement l'enceinte de rembourrage et qui est assurée à l'arête supérieure (22) à l'encontre d'un décollement par suite d'une surpression dans l'enceinte de rembourrage, caractérisé en ce que le dispositif de sécurité agissant depuis le haut du fond à tuyères est fabriqué au moyen d'éléments de fixation (6) en forme de console en béton armé, ces éléments de fixation étant ancrés au moyen de parties d'armature (60) dans la paroi de réacteur, et les ancrages (65) sont insérés par coulée dans la paroi de réacteur réalisée en une coulée.

2. Réacteur selon la revendication 1, caractérisé en ce qu'il est associé à la ou chaque plaque préfabriquée (20) du fond à tuyères (2) une paire d'éléments de fixation en forme de console (6).

3. Réacteur selon la revendication 1 ou 2, caractérisé en ce que les parties d'armature à ancrer (60) des éléments de fixation en forme de console (6) sont constituées respectivement d'une tige courbée, essentiellement en forme de U et dont les extrémités libres (65) sont coulées dans la paroi de réacteur (5).

4. Réacteur selon la revendication 3, caractérisé en ce que les tiges en forme de U (60) sont disposées dans des plans horizontaux.

5. Réacteur selon la revendication 4, caractérisé en ce que les tiges verticales (61) sont reliées aux tiges en forme de U (60) et constituent ainsi l'armature.

6. Réacteur selon l'une des revendications 1 à 5, caractérisé en ce qu'un mortier de coulée (8a) qui rend étanche des fentes (25) entre le fond à tuyères et la paroi de réacteur, constitue une liaison par forces.

7. Procédé de fabrication d'un réacteur selon l'une des revendications 1 à 6, caractérisé en ce que des tiges d'armature courbées pour des éléments de fixation de plaques de fond à tuyères sont insérés par coulée lors de la coulée des parois de réacteur, des parties des tiges d'armature étant érigées librement dans l'intérieur du réacteur, noyées dans des niches et, après un endroit de pliage, à proximité de la paroi de réacteur, sont orientées parallèlement à celle-ci, en ce qu'après la fabrication de la paroi de réacteur, des plaques de fond à tuyères préfabriquées sont placées dans l'intérieur du réacteur, qu'ensuite des fentes entre le fond à tuyères et la paroi de réacteur sont rendues étanches, que les tiges d'armature érigées librement sont courbées vers l'intérieur du réacteur et sont reliées avec des tiges additionnelles respectivement en une structure d'armature d'un corps en forme de console, et en ce qu'on coule enfin autour de chacune des structures d'armature un corps en béton qui est en liaison par force d'une part avec le fond à tuyères et d'autre part avec la paroi de réacteur.

8. Procédé selon la revendication 7, caractérisé en ce que les plaques de fond à tuyères lors de la mise en place dans l'intérieur du réacteur, sont placées sur un échafaudage de montage en bois et avec une surface d'appui rabotée.

9. Procédé selon la revendication 8, caractérisé en ce que les plaques de fond à tuyères sont positionnées au moyen de l'échafaudage de montage suivant un écart prédéfini sur des faces d'appui latérales, et en ce que la fente entre ces faces d'appui et les plaques de fond à tuyères sont remplies d'un mortier de coulée.

10. Procédé selon la revendication 9, caractérisé en ce que des parties de l'échafaudage de montage sont disposées de façon qu'elles puissent être utilisées comme coffrage pour le mortier de coulée.
